# EUROPÄISCHE PATENTANMELDUNG

(11) **EP 3 637 047 A1**
(43) Veröffentlichungstag der Anmeldung: **15.04.2020**
(21) Anmeldenummer: 19196683.7
(22) Anmeldetag: 11.09.2019
(51) Int. Cl.: G01B 11/25

(54) **VORRICHTUNG UND VERFAHREN ZUM MESSEN DER GERADHEIT EINES STABFÖRMIGEN WERKSTÜCKS**

(30) Priorität: 11.09.2018 DE 102018007178
(71) Anmelder: MSG Maschinenbau GmbH, 57392 Schmallenberg (DE)
(72) Erfinder: Kavousian, Arshad, 57319 Bad Berleburg (DE); Kramer, Mattias, 59872 Meschede (DE)
(74) Vertreter: Verhasselt, Jörn

(57) **Zusammenfassung**

Vorrichtung zur Messung der Geradheit eines stabförmigen Werkstücks, aufweisend eine Auflage für das stabförmige Werkstück, die mehrere Abschnitte mit jeweils einer Auflagefläche aufweist, wobei eine Halterung für eine Projektionsvorrichtung zum Projizieren eines Lichtstrahls auf die Auflage und/oder eine Bilderfassungsvorrichtung zum Erfassen eines Bildes eines auf das auf der Auflage aufliegenden Werkstücks vorgesehen ist, und eine Referenzeinrichtung, die ausgestaltet ist, eine Position der Halterung zu mindestens einem Ort der Auflage in Beziehung zu setzen.

## Beschreibung

Die Erfindung betrifft eine Vorrichtung zur Messung der Geradheit eines stabförmigen Werkstücks sowie ein Verfahren zum Messen der Geradheit eines stabförmigen Werkstücks.

Die Geradheit von stabförmigen Werkstücken ist ein Qualitätsmerkmal, das für Anforderungen an das Werkstück von endscheidender Bedeutung sein kann. Meist wurde in der Vergangenheit die Geradheit eines stabförmigen Werkstücks, insbesondere eines gerichteten Rohres, mittels Augenmaß vermessen, wodurch die Geradheitsmessung dem subjektiven Empfinden der die Messung durchführenden Person überlassen wurde. Ferner sind auch Verfahren bekannt, bei denen die Geradheit eines stabförmigen Werkstücks mittels mechanischen Abtastens oder Anlegen von Schablonen vermessen wird.

Aus EP 3 225 320 A1 ist eine Vorrichtung bekannt, mit der die Geradheit stabförmiger Werkstücke bestimmt werden kann. Es wird eine globale Geradheit bestimmt. Dabei werden die auf eine Auflage wirkenden Kräfte, die von dem Werkstück auf die Auflage aufgrund ihrer Abweichung von der Geradheit ausgeübt werden (Eigenspannungen), bestimmt. Die Vorrichtung hat sich für im Querschnitt runde Werkstücke bewährt. Die Eigenspannung ist präzise bestimmbar und die sich daraus ergebende globale Geradheit ermittelbar. Beispielsweise ist es möglich, gerade Abschnitte eines Werkstücks zu erfassen und genau diese Abschnitte aus dem Werkstück zu isolieren. Es hat sich jedoch herausgestellt, dass es bei der Bestimmung der Geradheit von Werkstücken, die ein unrundes Profil aufweisen, einer Verbesserung bedarf.

Aufgabe der vorliegenden Erfindung ist es, eine Vorrichtung und ein Verfahren zu schaffen, mit der bzw. dem eine Verbesserung der Geradheitsbestimmung stabförmiger Werkstücke mit unrundem Profil erreicht werden kann.

Die Aufgabe wird durch den Gegenstand der unabhängigen Patentansprüche gelöst. Vorteilhafte Ausführungsformen sind Gegenstand der abhängigen Patentansprüche.

Kern der Erfindung ist es, eine optische Information des stabförmigen Werkstücks mit einer Information, die aus der Auflage für das Werkstück gewonnen werden kann, zu korrelieren. Es ist eine Auflage für ein stabförmiges Werkstück vorgesehen, bei der Einflüsse von Eigengewicht des stabförmigen Werkstücks und von außen angreifender Kräfte erfasst werden können. Das Werkstück wird frei auf die Auflage gelegt, d.h. nicht eingespannt, und es werden von von dem stabförmigen Werkstück auf die Auflage ausgeübte Kräfte berücksichtigt, was zu einer deutlichen Verbesserung der Messung der Geradheit führt. Eine Verfälschung durch vorhandene von außen am stabförmigen Werkstück angreifende Kräfte, beispielsweise mittels einer Einspannung des Werkstücks, kann reduziert werden, weil diese berücksichtigt werden können. Insbesondere mechanische Spannungen des Werkstücks aufgrund der Auflage, die zu einer "Verformung" des stabförmigen Werkstücks führen können, werden berücksichtigt und ihre Auswirkungen auf die Geradheit einbezogen. Die Auflage kann sich in gewissem Maße frei aufgrund der Eigenspannungen des Werkstücks bewegen bzw. können die von dem Werkstück allein aufgrund des freien Aufliegens ausgeübten Kräfte bestimmt werden. Um eine möglichst gute optische Information über die Kontur bzw. das Profil des Werkstücks zu ermöglichen, wird eine Halterung für eine Projektionsvorrichtung zum Projizieren eines Lichtstrahls auf die Auflage und/oder eine Bilderfassungseinrichtung zum Erfassen eines Bildes eines auf der Auflage aufliegenden Werkstücks verwendet. Die Kontur des Werkstücks kann so sehr genau ermittelt werden. Insbesondere können mit mehreren Halterungen und/oder einer verfahrbaren Halterung Veränderungen der Kontur entlang der Längsrichtung erfasst werden. Um die Informationen der Auflage und die optischen Informationen zu korrelieren, ist eine Referenzeinrichtung vorgesehen, die ausgestaltet ist, eine Position der Halterung ("Koordinatensystem der optischen Messung" bzw. "Koordinatensystem der Halterung") mit mindestens einem Ort der Auflage ("Koordinatensystem der Auflage" bzw. "Koordinatensystem des Werkstücks" oder allgemein "Weltkoordinatensystem") in Beziehung zu setzen. Es kann eine Referenzierung erreicht werden. Damit kann die für einen Ort der Auflage gewonnene Information der optischen Abbildung nahezu im Wesentlichen zum gleichen Ort für die aus der Auflage gewonnene Information der Kraftmessung in Beziehung gesetzt werden. Obwohl der Abstand und die Ausrichtung zwischen Halterung und Auflage per se nicht bekannt ist bzw. sich ändern kann, können die Halterung und die Auflage bezüglich eines oder mehrerer Punkte im Raum miteinander mittels der Referenzeinrichtung in Beziehung gesetzt werden. Auch kann - ist aber in einer ersten Näherung nicht notwendig und führt trotzdem zu einer Verbesserung gegenüber dem Stand der Technik - eine Abweichung aufgrund einer Toleranz während der Bewegung der Halterung erfasst werden. Das Koordinatensystem der Halterung kann mit dem durch die Auflage "aufgespannten" Koordinatensystem in Beziehung gesetzt werden. Eine drei-dimensionale Beziehung zwischen den beiden Koordinatensystemen kann mittels der Referenzeinrichtung bestimmt werden.

Es ist insbesondere möglich, die Geradheit von einem stabförmigen Werkstück zu messen bzw. zu ermitteln, welches insbesondere einen von einer runden Form abweichenden Querschnitt über seine Länge aufweist. Das stabförmige Werkstück kann ein Profil aufweisen. Insbesondere kann das stabförmige Werkstück ein Profilstahl sein.

Die Erfindung schafft eine Vorrichtung zur Messung der Geradheit eines stabförmigen Werkstücks. Die Vorrichtung weist eine Auflage für das stabförmige Werkstück auf, die mehrere Abschnitte mit jeweils einer Auflagefläche aufweist. Ferner ist eine Halterung für eine Projektionsvorrichtung zum Projizieren eines Lichtstrahls auf die Auflage und/oder eine Bilderfassungsvorrichtung zum Erfassen eines Bildes eines auf der Auflage aufliegenden Werkstücks vorgesehen. Die Vorrichtung weist auch eine Referenzeinrichtung auf, die ausgestaltet ist, eine Position der Halterung zu mindestens einem Ort der Auflage in Beziehung zu setzen.

Alternativ oder zusätzlich kann vorgesehen sein, dass eine Torsion des stabförmigen Werkstücks gemessen werden kann. Unter einer "Torsion" wird ein "Drall" des stabförmigen Werkstücks bezogen auf den Querschnitt verstanden. Die Torsion kann mittels eines Drehmomentgebers, welcher an einer Auflagefläche vorgesehen sein kann, für den Bereich der Auflagefläche ermittelt werden.

Es kann mindestens ein Kraftsensor zur Bestimmung einer von dem stabförmigen Werkstück auf die Auflagefläche ausgeübten Kraft in einer Richtung im Wesentlichen quer zur Richtung der Erdbeschleunigung vorgesehen sein. Insbesondere kann ein Kraftsensor in einer, zwei oder allen Auflagefläche bei der Verwendung von drei Auflageflächen für das Werkstück vorgesehen sein. Bei der Verwendung von lediglich zwei Auflageflächen für das Werkstück ist kein Kraftsensor notwendig, kann aber dennoch an einer oder beiden Auflageflächen vorgesehen sein. Das Werkstück kann dabei auf der Auflage frei aufliegen, ohne dass auf das Werkstück, beispielsweise mit Backen, Greifarmen oder ähnlichem, eine Kraft ausgeübt wird.

Eine Halterung ist im Sinne der Beschreibung zumindest ein Bauelement, an oder in dem eine Projektionsvorrichtung und/oder eine Bilderfassungsvorrichtung angeordnet bzw. fixiert werden kann. Die Halterung kann Aufnahmen für Projektionsvorrichtung und/oder Bilderfassungsvorrichtung aufweisen. Die Halterung kann auch einen plattenförmigen Abschnitt aufweisen, an dem die Projektionsvorrichtung und/oder die Bilderfassungsvorrichtung befestigt bzw. fixiert werden kann. Bevorzugt sind an der Halterung sowohl die Projektionsvorrichtung als auch die Bilderfassungsvorrichtung angeordnet, um miteinander entlang der Auflage bewegt werden zu können. Somit kann insbesondere ein von der Projektionsvorrichtung projizierter Lichtstrahl, der in Richtung der Auflage auf das auf dieser aufliegende Werkstück projiziert wird, gleichmäßig, insbesondere im gleichen Winkel und mit gleicher Tiefenschärfe, von der Bilderfassungsvorrichtung erfasst bzw. abgebildet werden. Eine sehr genaue optische Erfassung des Profils des Werkstücks ist möglich.

In einer alternativen Ausführungsform kann auch ein mechanisches Abtasten des Werkstücks entlang der Längsachse des Werkstücks bzw. entlang einer Verbindungslinie der Auflagefläche vorgesehen sein.

Mit mehreren entlang der Auflage statisch angeordneten Halterungen, die beispielsweise eine Projektionsvorrichtung und/oder eine Bilderfassungsvorrichtung aufweisen können, kann schon eine gute optische Erfassung erreicht werden. Jede Halterung kann hinsichtlich ihrer Messposition zur Position der Auflage in Beziehung gesetzt werden. Die Referenzierung kann einmal erfolgen und in vorbestimmten Zeitintervallen wiederholt werden. Eine Referenzierung während jeder Messung ist nicht notwendig, aber auch nicht ausgeschlossen. Bevorzugt werden mehr als eine Halterung verwendet, insbesondere zwei, drei, vier, fünf, sechs, sieben oder mehr. Es kann vorgesehen sein, dass statisch angeordnete Halterungen im Abstand von 0,3m bis 1,5m, bevorzugt 0,5m bis 1,3m, entlang der Längsrichtung der Auflage vorhanden sind.

Eine Projektionsvorrichtung im Sinne der Beschreibung kann eine Vorrichtung sein, die Licht in Richtung der Auflage zur Beleuchtung eines auf der Auflage aufliegenden Werkstücks aussendet. In einer bevorzugten Ausführungsform kann die Projektionsvorrichtung ausgestaltet sein, einen Lichtstrahl, insbesondere linienförmig, ganz besonders bevorzugt mit einer Erstreckung quer zur Auflage, auf die Auflage bzw. auf das auf der Auflage aufliegende stabförmige Werkstück zu projizieren. Es kann ein Lichtstrahl vorbestimmter Form auf die Auflage bzw. auf das auf der Auflage aufliegende stabförmige Werkstück projiziert werden. Je nach Profil des Werkstücks kann eine vorbestimmte Form des Lichtstrahls gegenüber einer ebenen Fläche, auf die der Lichtstrahl projiziert werden kann, verändert und das Profil sichtbar gemacht werden.

Eine Bilderfassungsvorrichtung im Sinne der Beschreibung kann eine Vorrichtung sein, die einen Pixel aufweisenden Kamerachip aufweisen oder als solcher ausgestaltet sein kann. Die Bilderfassungseinrichtung kann die Auflage bzw. das auf der Auflage aufliegende Werkstück im "Auflichtverfahren" und/oder im "Gegenlichtverfahren" erfassen. Eine Projektionsvorrichtung ist möglich in einer bevorzugten Ausführungsform, aber nicht zwingend notwendig. Mittels der Bilderfassungeinrichtung kann eine Kontur eines auf der Auflage aufliegenden Werkstücks erfasst werden. Die Bilderfassungseinrichtung kann die Grundlage dafür liefern, dass die Kontur des Werkstücks erkannt wird. Beispielsweise kann als Teil der Bilderfassungseinrichtung oder separat zu dieser eine Konturerkennungseinrichtung vorgesehen sein, die das von der Bilderfassungseinrichtung aufgenommene Bild hinsichtlich der Kontur des Werkstücks auswertet.

In einer bevorzugten Ausführungsform ist die Halterung mittels einer Verfahreinrichtung im Wesentlichen entlang der Auflage verfahrbar. Eine Verfahreinrichtung im Sinne der Beschreibung ist eine Einrichtung zum Bewegen der Halterung entlang der Auflage. Die Einrichtung kann eine Führung in Form einer Schiene aufweisen, die die Richtung vorgibt, an der die Halterung entlang der Auflage bewegt werden kann. Insbesondere kann die Führung im Wesentlich längs der Auflage angeordnet sein. Die Halterung kann an der Verfahreinrichtung befestigt oder von dieser bewegt werden. Die Halterung kann auch Teil der Verfahreinrichtung sein. Es sind Mittel vorhanden, mittels derer die Halterung auf bzw. an der Führung bzw. Schiene bewegt werden kann. Insbesondere kann die Verfahreinrichtung einen Linearantrieb aufweisen.

Im Sinne der Beschreibung weist eine Referenzeinrichtung eine Steuerung, insbesondere einen (Mikro-)Controller oder (Mikro-)Prozessor oder ähnlichen elektronischen Baustein zur Verarbeitung von Signalen auf, mit dem die Referenzeinrichtung ausgestaltet ist, eine Position der Halterung zu mindestens einem Ort der Auflage in Beziehung zu setzen. Ferner kann die Referenzeinrichtung einen Speicher aufweisen, mit der die Beziehung der Position der Halterung zum Ort der Auflage gespeichert werden kann. Bei der Referenzeinrichtung kann es sich um einen Industrie-Computer oder handelsüblichen PC handeln.

Die Referenzeinrichtung kann einmal die räumliche Beziehung zwischen Halterung und Auflage bestimmen und dann kann die Beziehung bei der Messung berücksichtigt werden; dies kann insbesondere bei der Verwendung eines Seils, wie es nachfolgend beschrieben ist, der Fall sein. Damit muss die Beziehung nur einmal bestimmt werden und kann dann für viele Messungen genutzt werden. In vorbestimmten Zeitabständen und/oder nach einer vorbestimmten Anzahl von Messungen der Geradheit/Werkstücken kann die Referenzeinrichtung die Beziehung zwischen Halterung und Auflage überprüfen bzw. die Beziehung neu festgestellt werden. In einer besonders bevorzugten Ausführungsform kann die Referenzeinrichtung bei im Wesentlichen jeder Einzelmessung beim Abfahren die räumliche Beziehung zwischen Halterung und Auflage bestimmen. Bei jeder Messung kann eine Referenzierung erfolgen; die Beziehung zwischen Ort der Auflage und Position der Halterung kann in Echtzeit während der Einzelmessungen zur Messung der Geradheit selbst erfolgen. Das Koordinatensystem der Halterung kann in das Koordinatensystem der Auflage überführt werden. Hierdurch kann der Ort der Halterung mit dem Ort der Auflage, der mittels der Projektionsvorrichtung und/oder der Bilderfassungsvorrichtung betrachtet wird, in Beziehung gesetzt werden.

Für jede Auflagefläche kann mindestens ein Kraftsensor vorgesehen sein. Mittels des Kraftsensors wird die von dem stabförmigen Werkstück auf die jeweilige Auflagefläche ausgeübte Kraft gemessen.

Die Richtung im Wesentlichen quer zur Richtung der Erdbeschleunigung kann zusätzlich mit der Längsrichtung des stabförmigen Werkstücks einen Winkel ungleich Null einschließen, also ungleich der Längsrichtung des stabförmigen Werkstücks sein. Sofern auf die Längsrichtung des stabförmigen Werkstücks abgestellt wird, so entspricht die Längsrichtung des stabförmigen Werkstücks im Wesentlichen der Anordnung der Abschnitte der Auflage, welche in einer Reihe angeordnet sein können. Die Abschnitte können insbesondere entsprechend der Längsrichtung des stabförmigen Werkstücks in einer Reihe angeordnet sein. Der Begriff "Längsrichtung des stabförmigen Werkstücks" kann damit im Wesentlichen der "Anordnung der Abschnitte der Auflage in einer Reihe" bzw. "Längserstreckung der Auflage" entsprechen. Der Kraftsensor kann einen Anteil einer Kraft messen, der quer zur Richtung der Erdbeschleunigung ist, wobei zudem dieser Anteil insbesondere ungleich der Längsrichtung des stabförmigen Werkstücks wirken kann.

Die Messung der Kraft an den Abschnitten der Auflage macht es möglich, die Abschnitte in einem Abstand zueinander vorzusehen unabhängig davon, wie lang das Werkstück ist. Die Abschnitte, an denen eine Kraftmessung erfolgt, können auch zur endseitigen Auflage des stabförmigen Werkstücks dienen. Eine erfindungsgemäße Vorrichtung kann flexibel unterschiedliche Längen von stabförmigen Werkstücken vermessen.

Es kann vorgesehen sein, dass mindestens eine der Auflageflächen quer zur Richtung der Erdbeschleunigung bewegbar ist, wobei die Bewegung insbesondere mindestens einen Anteil aufweist, der ungleich der Längsrichtung des stabförmigen Werkstücks ist. Die Bewegbarkeit der mindestens einen Auflagefläche kann durch die Auflage des aufliegenden stabförmigen Werkstücks initiiert werden, wenn dieses beispielsweise eine plastische Verformung aufweist, die in der entsprechenden Richtung quer zur Richtung der Erdbeschleunigung wirkt. Eine zusätzlich zu der Kraftmessung vorgesehene vorgenannte Bewegung kann die auf die Auflagefläche wirkenden Kräfte, die von dem stabförmigen Werkstück ausgeübt werden, verringern.

Erfindungsgemäß wird unter der Messung der Geradheit bzw. dem Messen der Geradheit die Prüfung der Geradheit des stabförmigen Werkstücks verstanden. Insbesondere kann die Messung der Geradheit bzw. das Messen der Geradheit das Ermitteln der Umfangskontur des stabförmigen Werkstücks umfassen, so dass zumindest ein Teilabschnitt des stabförmigen Werkstücks von außen abgebildet werden kann. Insbesondere kann erfindungsgemäß zumindest ein Teilabschnitt der Außenkontur des stabförmigen Werkstücks dreidimensional abgebildet werden. Es kann vorgesehen sein, dass das stabförmige Werkstück in Gänze dreidimensional von außen vermessen und dargestellt werden kann. Eine Protokollierung ist möglich. Die Vorrichtung schafft die Möglichkeit, ein Protokoll für jedes vermessene stabförmige Werkstück zu erstellen. Die Qualität des stabförmigen Werkstücks kann schnell für jedes Werkstück ermittelt werden.

Erfindungsgemäß wird unter dem Begriff "stabförmiges Werkstück" ein Werkstück unterschiedlichster geometrischer Ausprägung verstanden. Ein stabförmiges Werkstück kann insbesondere ein Profil, Vollmaterial, Vierkant-, Mehrkant-, Rund-, Oval-, offene oder geschlossene Profile sowie Kombinationen der genannten Werkstückformen oder insbesondere ein Rohr umfassen.

Erfindungsgemäß werden unter Abschnitten einer Auflage Bereiche verstanden, die für die Ablage eines stabförmigen Werkstücks während der Messung verwendet werden. Die Abschnitte können im Wesentlichen in einer Reihe angeordnet sein. Das stabförmige Werkstück kann auf einer Auflagefläche eines Abschnitts aufliegen. Die Auflagefläche kann im Raum fixiert sein. Die Auflagefläche kann, insbesondere unabhängig von anderen Bereichen der Auflage, beweglich sein und insbesondere kraft-, druck- und/oder weggesteuert, insbesondere in Richtung im Wesentlichen der Erdbeschleunigung, angesteuert werden. Beispielsweise kann ein Abschnitt zur Kompensation des Gewichts angesteuert werden. Die Auflagefläche kann endseitig an einem Stempel oder einer Kolbenstange angeordnet sein, der bzw. die als bewegliches Teil gegenüber einem Zylinder verfahren kann. Die Abschnitte mit den Auflageflächen können insbesondere auch in Richtung im Wesentlichen der Erdbeschleunigung bewegbar sein und dabei kraft-, druck- und/oder weggesteuert angesteuert werden. Bei der Ansteuerung kann es sich um eine Regelung handeln. Mittels der bewegbaren Abschnitte mit den Auflageflächen kann eine Vibration und/oder eine Schwingung des stabförmigen Werkstücks reduziert werden.

Die Abschnitte können fixiert zueinander in Längsrichtung der Aufnahme angeordnet sein. Benachbarte Abschnitte können jeweils den im Wesentlichen gleichen Abstand zueinander aufweisen. Es kann alternativ oder zusätzlich vorgesehen sein, dass Abschnitte vorhanden sind, die einen unterschiedlichen Abstand zueinander aufweisen. Ein Abstand im Bereich von ungefähr 0,5m bis ungefähr 1,7m ist bevorzugt. Bevorzugt wird bei der Wahl des Abstands das Flächenträgheitsmoment des zu vermessenden Werkstücks berücksichtigt, indem eine plastische Verformung zwischen den Auflageflächen vermieden wird, so dass ein geringerer Abstand als 0,5m gewählt werden kann.

Der Begriff "Auflagefläche" umfasst im Wesentlichen jede Form, insbesondere eine im Wesentlichen plane Fläche, auf der das stabförmige Werkstück abschnittsweise aufliegen kann. Andere Formen sind möglich. Es ist beispielsweise eine U- oder V-Form möglich, wobei das stabförmige Werkstück zwischen den Schenkeln des U oder V liegen kann. Die Schenkel können insbesondere einen Winkel von 90° miteinander einschließen; andere Winkel sind möglich. Es können Begrenzungen für die Auflagefläche vorhanden sein, die sich längs der Längsrichtung des stabförmigen Werkstücks erstrecken und einen Abschnitt aufweisen, der zumindest einen Anteil aufweist, der sich in Richtung der Erdbeschleunigung erhebt. Dabei kann dem Rechnung getragen werden, dass "rollende Stäbe" als stabförmige Werkstücke vermessen werden können, die von der Aufnahmefläche ohne ein besonderes Vorsehen der Ausgestaltung der Aufnahmefläche rollen können. Die Auflagefläche kann derartig ausgestaltet sein, dass eine ausreichende Haftreibung zwischen dem stabförmigen Werkstück und der Auflagefläche vorliegt. Hierzu kann die Auflagefläche entsprechend angeraut und/oder mit einem entsprechenden Werkstoff bzw. Material, insbesondere einem Kunststoff, versehen sein. Die Auflagefläche kann eine Flächennormale aufweisen, die im Wesentlichen parallel zur Richtung der Erdbeschleunigung ausgerichtet ist. Die Auflagefläche kann insbesondere kleiner oder gleich groß sein wie der Durchmesser des stabförmigen Werkstücks. Die Größe der Auflagefläche kann so gewählt sein, dass kein Überstand der Auflagefläche über die maximale Breite des stabförmigen Werkstücks vorliegt.

Der Begriff "Erdbeschleunigung" bzw. "Richtung der Erdbeschleunigung" ist die Richtung des Erdschwerefelds und fällt zusammen mit im Wesentlichen der Richtung der Fallbeschleunigung bzw. Lotrichtung. Abweichungen, die beispielsweise durch die Corioliskraft bewirkt werden, sind dabei im Rahmen der Toleranz inbegriffen.

Der Begriff "quer" als Richtungsangabe bzw. geometrische Angabe relativ zu einer weiteren Richtung umfasst den rechten Winkel, aber auch Abweichungen von diesem. Die Angabe "quer" umfasst einen mit der Bezugsrichtung eingeschlossenen Winkel im Bereich von ungefähr 5° bis 175°, bevorzugt zwischen ungefähr 20° und ungefähr 160°, mehr bevorzugt zwischen ungefähr 35° und ungefähr 145°, insbesondere bevorzugt zwischen ungefähr 50° und ungefähr 130°, ganz besonders bevorzugt zwischen ungefähr 65° und ungefähr 115°, ganz besonders insbesondere bevorzugt zwischen ungefähr 70° und ungefähr 110°. Die Bewegung quer zur Richtung der Erdbeschleunigung kann entlang einer ersten Richtung erfolgen, wobei eine weitere, zweite Komponente in einer weiteren Richtung quer zur Richtung der Erdbeschleunigung und quer zur ersten Richtung nicht ausgeschlossen ist. Erfindungsgemäß ist eine Kraft mit einer Komponente messbar, die quer zur Richtung der Erdbeschleunigung ausgerichtet ist und insbesondere ungleich der Längsrichtung des stabförmigen Werkstücks ist. Die Kraftmessung für einen Anteil, der im Wesentlichen horizontal bzw. waagerecht wirkt ist möglich, wobei dieser Anteil nicht (nur) in Richtung der Längsrichtung des stabförmigen Werkstücks wirkt.

In einer bevorzugten Ausführungsform weist die Referenzeinrichtung ein im Raum festgelegtes Referenzobjekt auf. Im Raum festgelegt kann insbesondere bedeuten, dass eine feste, insbesondere unveränderliche, räumliche Beziehung zur Auflage vorliegt. Die Referenzeinrichtung kann ausgestaltet sein, die Position des Referenzobjekts mittels einer an der Halterung fixierten Erfassungsvorrichtung zu erfassen. Zusätzlich oder alternativ kann die Referenzeinrichtung ein an der Halterung befindliches Referenzobjekt aufweisen, wobei die Referenzeinrichtung zusätzlich oder alternativ ausgestaltet sein kann, die Position des Referenzobjekts mittels einer im Raum festgelegten Erfassungsvorrichtung in Bezug auf die Auflage zu erfassen. Es kann ein im Raum im Wesentlichen unveränderbar angeordnetes Referenzobjekt und/oder ein an der Halterung befindliches Referenzobjekt verwendet werden, gegenüber dem sowohl der Bezug zur Halterung als auch der Bezug zur Auflage gebildet wird. Das Koordinatensystem der Halterung kann in das Koordinatensystem des Referenzsystems überführt werden und das Koordinatensystem der Auflage kann in das Koordinatensystem des Referenzsystems überführt werden, so dass die Koordinatensysteme der Halterung und der Auflage ineinander überführt werden können. Der Ort der Halterung kann in Bezug auf das Koordinatensystem der Auflagen bestimmt werden. Dies kann möglichst genau geschehen.

In einer bevorzugten Ausführungsform kann das im Raum festgelegte Referenzobjekt - sofern vorhanden - ein im Wesentlichen längs der Auflage aufgehängtes Objekt sein. Insbesondere kann das Objekt ein oberhalb der Vorrichtung bzw. oberhalb der Halterung, aufgehängtes längliches Objekt sein. Bei dem länglichen Objekt kann es sich insbesondere um ein Seil handeln, dessen Lage und Ausrichtung sich zwangsläufig zwischen zwei Aufhängungspunkten ergibt. Es kann ein Referenzobjekt verwendet werden, dessen Lage im Raum mathematisch genau bestimmt werden kann. Insbesondere können zwei im Raum festgelegte Referenzobjekte vorgesehen sein, damit eine eindeutige Zuordnung eines Punkts der Halterung zu einem Punkt der Auflage bzw. eine Überführung der Koordinatensysteme möglich ist. Bevorzugt können die beiden im Raum festgelegten Referenzobjekte im Wesentlichen mit gleicher Erstreckungsrichtung im Raum, insbesondere nebeneinander, angeordnet sein.

In einer bevorzugten Ausführungsform kann das an der Halterung befindliche Referenzobjekt - sofern vorhanden - ein optisches Mittel. Insbesondere kann das optische Mittel eine Blende sein, die mittels einer Lichtquelle, die insbesondere ein Laser sein kann, angestrahlt werden kann. Die Brechung an einer Ecke bzw. Kante der Blende kann auf eine Mattscheibe, die insbesondere im Lichtweg hinter der Blende angeordnet ist, und im Raum festgelegt ist, projiziert werden. Die Projektion der Ecke oder Kante kann auf der Mattscheibe vermessen werden. Die Projektion der Ecke oder Kante kann sich bei der Bewegung der Halterung verändern und mittels der Projektion kann der Ort und die Lage der Halterung bestimmt werden.

In einer bevorzugten Ausführungsform kann das an der Halterung befindliche Referenzobjekt - sofern vorhanden - ein Reflektor sein, der einen Lichtstrahl reflektiert. Der Reflektor kann als Target ausgestaltet sein, auf das ein Lichtstrahl, insbesondere ein Laserstrahl, gerichtet wird und der Laserstrahl in die gleiche Richtung zurückgesendet wird. Hierdurch kann die X-Y-Position der Halterung ermittelt werden. Werden zwei Reflektoren verwendet, so können auch Drehungen und damit auch dreidimensionale Koordinatenbeziehungen ermittelt werden. In einer bevorzugten Ausführungsform, in der im Wesentlichen nur die Anordnung von Reflektor und Lichtquelle vertauscht ist, kann das an der Halterung befindliche Referenzobjekt - sofern vorhanden - eine einen Lichtstrahl erzeugende Lichtquelle, insbesondere ein Laser, sein. Insbesondere können zwei Lichtquellen an der Halterung vorgesehen sein. Im Raum festgelegt kann ein Reflektor bzw. zwei Reflektoren vorhanden sein.

In einer bevorzugten Ausführungsform kann das an der Halterung befindliche Referenzobjekt - sofern vorhanden - ein teildurchlässiges Abbildungsmittel sein, auf dem ein Lichtstrahl, insbesondere ein Laserstrahl, abgebildet werden kann. Der Ort der Abbildung kann ermittelt werden. Ferner ist durch die Ausbildung als teildurchlässiges Abbildungsmittel vorgesehen, dass ein Anteil des Lichtstrahls auch das Abbildungsmittel zumindest teilweise durchtreten kann. Der das Abbildungsmittel durchtretende Anteil des Lichtstrahls wird an einem im Raum festgelegten Empfänger erfasst. Der Ort des Auftreffens am Empfänger kann ermittelt werden. Somit kann in Kenntnis des Ausstrahlungspunktes des Lichtstrahls und des am Empfänger erfassten Orts eine Geradengleichung aufgestellt werden. Zudem kann mittels der Erfassung des Durchtrittspunkts des Lichtstrahls am Abbildungsmittel an der Halterung ein Bezug zwischen dem Koordinatensystem der Halterung und dem Koordinatensystem der Auflage bzw. des Raumes hergestellt werden. Sofern zwei Lichtstrahlen verwendet werden, kann die Lage im Raum eineindeutig bestimmt werden. Insbesondere können die Lichtstrahlen bzw. die die Lichtstrahlen erzeugenden Lichtquellen in einer bevorzugten Ausführungsform übereinander angeordnet sein; eine Anordnung nebeneinander bzw. versetzt zueinander ist ebenfalls möglich, wobei die Anordnung übereinander einer raumausnutzenderen Ausgestaltung Rechnung trägt.
In einer bevorzugten Ausführungsform kann die Projektionsvorrichtung ein Linienscanner sein.

In einer besonders bevorzugten Ausführungsform ist der mindestens eine Kraftsensor zur Bestimmung einer von dem stabförmigen Werkstück auf die Auflagefläche ausgeübten Kraft auch für die Bestimmung einer im Wesentlichen in Richtung der Erdbeschleunigung wirkenden Kraft ausgestaltet. Hierdurch kann das Ergebnis der Messung verbessert werden und die Vorrichtung einfach ausgestaltet sein. Es kann auch vorgesehen sein, dass ein weiterer Kraftsensor vorhanden ist, mit dem eine von dem stabförmigen Werkstück auf die Auflagefläche ausgeübte Kraft in einer Richtung im Wesentlichen in Richtung der Erdbeschleunigung bestimmbar ist. Es ist auch möglich, dass zwei Kraftsensoren vorhanden sind, die beide jeweils Anteile der Kraft in den genannten Richtungen messen und mittels der bekannten Anordnung, wie die Kraftsensoren zur Auflagefläche angeordnet sind, die Kräfte, insbesondere mathematisch unter Einbeziehung der Winkel, unter denen die Kraftsensoren messen bzw. diese angeordnet sind, ermittelt werden.

In der Beschreibung umfasst die Bestimmung oder Ermittlung einer Kraft mittels eines Kraftsensors in einer angegebenen Richtung auch die Möglichkeit, dass der Kraftsensor auch eine Kraft in einer anderen Richtung erkennt bzw. das von dem Kraftsensor erhaltene Signal kann einen entsprechenden (weiteren) Anteil aufweisen. Die Bestimmung oder Ermittlung kann mittels mehrerer Kraftsensoren bzw. entsprechender Signale erfolgen, um die Kraft in einer angegebenen Richtung zu ermitteln.

In einer bevorzugten Ausführungsform kann die Auflagefläche neigbar gelagert sein. Die Auflagefläche kann insbesondere derart gelagert sein, dass eine kardanische Lagerung bzw. eine gelenkige Lagerung vorliegt. Die Auflagefläche kann als Endbereich einer pendelnden Stütze, die endseitig gelenkig gelagert sein kann, ausgestaltet sein. Die Auflagefläche ist nach oben zur Auflage des stabförmigen Werkstücks ausgerichtet und weist in Richtung der Erdbeschleunigung bzw. unter einem Winkel zur Erdbeschleunigung eine gelenkige Lagerung auf. Die Auflagefläche kann zusätzlich oder alternativ verschieblich gelagert sein. Die verschiebliche Lagerung kann insbesondere in zwei zueinander orthogonalen Richtungen verschieblich sein. Die beiden Richtungen können auch einen Winkel ungleich 90° zueinander einschließen. Die Verschieblichkeit der Auflagefläche kann entlang einer Ebene erfolgen. Die Verschieblichkeit der Auflagefläche kann auch derart erfolgen, dass die Auflagefläche entlang eines Kugelsegments erfolgt. Bei der Bewegung und Lagerung der Auflagefläche kann eine Reduzierung von Reibungskräften bevorzugt sein, bei der beispielsweise eine Linearführung, insbesondere mit einer Druckluftauflage vorgesehen ist. Es kann auch zusätzlich oder alternativ vorgesehen sein, dass bei der Linearführung ein magnetisches Feld verwendet wird. Zusätzlich oder alternativ kann ein Rollenlager zur Reduzierung der Reibungskraft verwendet werden.

In einer besonders bevorzugten Ausführungsform ist die Vorrichtung derart ausgestaltet, dass (a) die Bewegung der und/oder die Kraft auf die Auflagefläche im Wesentlichen quer zur Richtung der Erdbeschleunigung und/oder (b) die Bewegung der und/oder die Kraft auf die Auflagefläche in Richtung im Wesentlichen der Erdbeschleunigung und/oder der Richtung in der die Auflagefläche bewegt werden kann, erfasst wird. Die Bewegung kann mittels einer optischen Einrichtung erfasst werden. Die Einwirkung der Kraft kann beispielsweise mittels eines oder mehrerer Kraftsensoren am Abschnitt mit der Auflagefläche erfolgen. Es kann eine Wägezelle als Sonderform eines Kraftsensors bzw. Kraftaufnehmers verwendet werden. Dadurch, dass die Bewegung der Auflagefläche erfasst werden kann, kann eine Deformation, die beispielsweise von der Geometrie des stabförmigen Werkstücks und/oder dem Material verursacht sein kann, insbesondere mathematisch, ermittelt werden, um beispielsweise Einflüsse von extern wirkenden Kräften und der Gravitation zu kompensieren. Es besteht auch die Möglichkeit einer Kennlinienaufnahme zur Bestimmung von Materialeigenschaften, wie beispielsweise des E-Moduls.

Die Vorrichtung kann insbesondere derart ausgestaltet sein, dass (a) die Kraft auf die Auflagefläche im Wesentlichen quer zur Richtung der Erdbeschleunigung sowie insbesondere ungleich zur Längsrichtung des stabförmigen Werkstücks erfasst wird und (b) die Kraft auf die Auflagefläche in Richtung im Wesentlichen der Erdbeschleunigung erfasst werden kann. Die Einwirkung der Kraft kann beispielsweise mittels eines oder mehrerer Kraftsensoren am Abschnitt mit der Auflagefläche erfolgen. Es kann eine Wägezelle als Sonderform eines Kraftsensors bzw. Kraftaufnehmers verwendet werden. Dadurch, dass die von dem stabförmigen Werkstück auf die Auflagefläche wirkende Kraft erfasst werden kann, kann eine Deformation, die beispielsweise von der Geometrie des stabförmigen Werkstücks und/oder dem Material verursacht sein kann, insbesondere mathematisch, ermittelt werden, um Einflüsse von extern wirkenden Kräften und der Gravitation zu kompensieren bzw. zu berücksichtigen.

Im Sinne der Beschreibung umfasst der Begriff "Kraftsensor" einen Sensor, der ein Einwirken einer Kraft auf die Auflagefläche erfassen kann, insbesondere das Einwirken einer Kraft auf die Auflagefläche in einer Richtung im Wesentlichen der Richtung der Erdbeschleunigung und/oder der Richtung in der die Auflagefläche bewegt werden kann, um beispielsweise die Gewichtskraft des stabförmigen Werkstücks zu kompensieren. Der Kraftsensor kann insbesondere einen Anteil einer Kraft bestimmen, der von dem stabförmigen Werkstück auf die Auflagefläche wirkt. Der Anteil kann quer zur Richtung der Erdbeschleunigung und insbesondere ungleich zur Längsrichtung des stabförmigen Werkstücks wirken. Der Kraftsensor kann mittels unterschiedlicher Sensoren ausgestaltet sein. Der Kraftsensor kann aus der Gruppe von Dehnungsmessstreifen; Federkörper-Kraftaufnehmern, insbesondere S-förmigen Federkörpern, bei denen eine Biegemessung am Mittelsteg durchgeführt werden kann; Piezo-Kraftaufnehmern; Elektromagnetischen Kraftaufnehmern und/oder resistiven Kraftaufnehmern ausgewählt werden.

Mittels eines oder mehrerer Kraftsensoren, die insbesondere in jedem Abschnitt der Auflage vorgesehen sind, ist es möglich, auch Reibungskräfte bei der Bewegung der Auflagefläche zu erfassen. Eine auf die Auflagefläche wirkende Kraft ist ermittelbar. Wenn eine Auflagefläche gegen das stabförmige Werkstück mit einem voreingestellten Druck ausfährt, so sollte die auf einen Kraftsensor wirkende Kraft mathematisch einfach berechenbar sein, wenn sich das System ideal verhält. Da aber Reibung beispielsweise zwischen einer Kolbenstange und einem Zylinder auftreten kann (insbesondere der sogenannte "stick-slip-effekt" als Haftgleiteffekt), kann es passieren, dass sich bei einem voreingestellten Druck das System nicht ideal verhält, d.h. beispielsweise die Kolbenstange in dem Zylinder zumindest teilweise haftet. Durch die Messung der Kraftsensoren, kann der Effekt der Reibung erkannt und mathematisch berücksichtigt werden, indem die ideale (Soll-)Kraft mit der mit dem Kraftsensor gemessenen Kraft verglichen wird. Durch die Berücksichtigung der am Kraftsensor ermittelten Kraft ist es möglich, die Auflagen anzusteuern, ohne diese regeln zu müssen. Insbesondere können alle Abschnitte der Auflage mit der gleichen Kraft bzw. dem gleichen Druck angesteuert werden, der unter Berücksichtigung der Masse bzw. Dichte des stabförmigen Werkstücks und dem E-Modul des Materials des Werkstücks ergeben kann.

Es ist auch möglich, dass die Auflagefläche derart in Richtung des stabförmigen Werkstücks ausfährt (im Wesentlichen in Richtung der Erdbeschleunigung), dass eine Gegenkraft messbar ist.

In einer bevorzugten Ausführungsform ist der mindestens eine der Abschnitte mit einem vorbestimmten Druck im Wesentlichen in Richtung entgegen der Erdbeschleunigung ausfahrbar. Hierdurch kann das Eigengewicht des stabförmigen Werkstücks, welches auf den Abschnitt wirkt, kompensiert werden.

Alternativ oder zusätzlich ist es möglich, dass mindestens einer der Abschnitte einen Weg, der einstellbar ist bzw. voreingestellt sein kann, im Wesentlichen entgegen der Richtung der Erdbeschleunigung ausfahren kann. Hierdurch kann dem Eigengewicht des auf dem Abschnitt aufliegenden stabförmigen Werkstücks entgegengewirkt werden bzw. Einflüsse hierdurch vermieden werden.

In einer besonders bevorzugten Ausführungsform ist jeder der Abschnitte, auf dem das stabförmige Werkstück zumindest teilweise aufliegt, mit im Wesentlichen gleichem voreingestellten Druck und/oder im Wesentlichen gleichem Weg im Wesentlichen in Richtung entgegen der Erdbeschleunigung ausfahrbar. Hierdurch kann über die gesamte Länge des stabförmigen Werkstücks, welches auf der Auflage aufliegt, das Eigengewicht kompensiert werden.

In einer besonders bevorzugten Ausführungsform sind die Auflagen nicht verfahrbar und es werden die zwischen dem auf die Auflagefläche aufgelegten stabförmigen Werkstück und der Auflagefläche wirkenden Kräfte erfasst, wobei mindestens zwei Anteile erfasst werden können. Ein Anteil in Richtung der Erdbeschleunigung und ein Anteil in Richtung quer zur Erdbeschleunigung, der insbesondere zusätzlich ungleich der Längsrichtung des stabförmigen Werkstücks sein kann.

In einer besonders bevorzugten Ausführungsform sind zwei endseitige Abschnitte der Auflage vorgesehen, die eine Fixierung des stabförmigen Werkstücks erlauben. Erfindungsgemäß wird dabei unter einer Fixierung verstanden, dass das stabförmige Werkstück unbeweglich quer zur Richtung im Wesentlichen der Erdbeschleunigung ist. Dies kann beispielsweise durch eine entsprechend geformte Auflagefläche erreicht werden. Die Auflagefläche der endseitigen Abschnitte kann dazu insbesondere eine U- oder V-förmige Form umfassen, was ermöglicht, dass quer zur Richtung im Wesentlichen der Erdbeschleunigung und quer zur Längsrichtung des stabförmigen Werkstücks Anlageflächen ausgebildet sind, die entgegengesetzt zueinander gerichtet sind und mit denen das stabförmige Werkstück in Kontakt ist.

Der Begriff "entgegengesetzt gerichtet" umfasst erfindungsgemäß Flächen oder Teilabschnitte von Flächen, deren Flächennormale parallel verlaufen oder einen Winkel von ≤ 90° zueinander einschließen. An den endseitigen Abschnitten der Auflage können ebenfalls die Kräfte ermittelt werden, die zwischen dem stabförmigen Werkstück und der Auflagefläche wirken, wobei zwei Anteile erfasst werden können: ein Anteil in Richtung der Erdbeschleunigung und ein Anteil in einer Richtung quer zur Erdbeschleunigung, der zudem auch ungleich zur Längsrichtung des stabförmigen Werkstücks sein kann.

In einer besonders bevorzugten Ausführungsform sind die endseitigen Abschnitte der Auflage so wie die anderen Abschnitte in einer Richtung im Wesentlichen der Erdbeschleunigung ansteuerbar bzw. bewegbar, insbesondere mittels einer Kolbenstange-Zylinder-Einheit. Besonders bevorzugt weisen die endseitigen Abschnitte keine besondere Beweglichkeit in Richtung quer zur Richtung der Erdbeschleunigung auf. Die endseitigen Abschnitte können mit einem oben beschriebenen Kraftsensor versehen sein, mit dem eine auf die Auflagefläche wirkende Kraft ermittelt werden kann. Die endseitigen Abschnitte können auch fixiert im Raum sein.

Sofern in der Beschreibung und/oder den Ansprüchen eine Zahlenangabe verwendet wird, so umfasst diese Zahlenangabe nicht nur den reinen Wert, sondern auch eine Bereichsangabe eines Intervalls mit Randwerten, die sich aus dem reinen Wert +/-10% oder +/-10° ergeben.

Es kann auch vorgesehen sein, dass die Lage des stabförmigen Werkstücks im Raum zusätzlich oder alternativ mittels einer mechanischen Abtastung ermittelt wird.

Die Erfindung schafft auch ein Verfahren zum Messen der Geradheit eines stabförmigen Werkstücks, wobei das Werkstück auf eine eine Auflagefläche aufweisende Auflage aufgelegt wird, eine Halterung für eine Projektionsvorrichtung zum Projizieren eines Lichtstrahls auf die Auflage und/oder eine Bilderfassungsvorrichtung zum Erfassen eines Bildes des Werkstücks vorgesehen ist, und mindestens eine Position der Halterung zu mindestens einem Ort der Auflage in Beziehung gesetzt wird. Bei dem Verfahren wird bevorzugt die von dem stabförmigen Werkstück auf die Auflagefläche ausgeübte Kraft in einer Richtung im Wesentlichen quer zur Richtung der Erdbeschleunigung gemessen.

Die Erfindung wird nachfolgend anhand von in den Zeichnungen dargestellten Ausführungsbeispielen näher erläutert.

In den Zeichnungen zeigt:
- Fig. 1: eine Vorrichtung zur Messung der Geradheit eines stabförmigen Werkstücks in einer isometrischen Darstellung in Bezug auf eine Auflage;
- Fig. 2: eine Detailansicht eines Abschnitts mit einer Auflagefläche gemäß einer Ausführungsform in teilweise geschnittener Darstellung;
- Fig. 3: eine Detailansicht eines Abschnitts mit einer Auflagefläche gemäß einer weiteren Ausführungsform in teilweise geschnittener Darstellung;
- Fig. 4a: die Vorrichtung gemäß Fig. 1 bis 3 in einer Seitenansicht in Bezug auf eine Erfassung einer Halterung in einer allgemeinen Darstellung;
- Fig. 4b: die Vorrichtung gemäß Fig. 4a in einer Ansicht von oben;
- Fig.5a: die Vorrichtung gemäß Fig. 1 bis 3 in einer Seitenansicht in Bezug auf eine Erfassung einer Halterung in einer Ausführungsform;
- Fig. 5b: die Vorrichtung gemäß Fig. 5a in einer Ansicht von oben;
- Fig. 6a: die Vorrichtung gemäß Fig. 1 bis 3 in einer Seitenansicht in Bezug auf eine Erfassung einer Halterung in einer weiteren Ausführungsform;
- Fig. 6b: eine Detailansicht der Fig. 6a und
- Fig. 7: die Vorrichtung gemäß Fig. 1 und 3 in einer Seitenansicht in Bezug auf eine Erfassung einer Halterung in einer weiteren Ausführungsform.

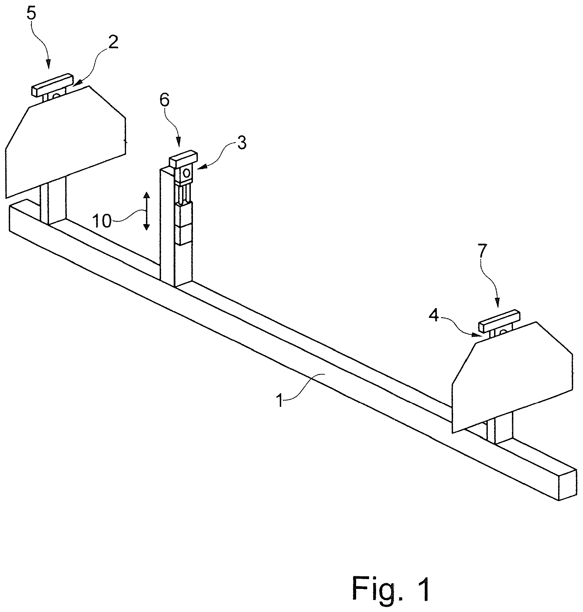

Fig. 1 zeigt in isometrischer Darstellung eine Vorrichtung zur Messung der Geradheit eines stabförmigen Werkstücks schräg von der Seite. Es ist eine Auflage für ein stabförmiges Werkstück, welches nicht gezeigt ist, vorhanden. Das stabförmige Werkstück kann in Längserstreckung eines Balkens 1, an dem Abschnitte 2, 3, 4 befestigt sind, ausgerichtet aufgelegt werden. Das stabförmige Werkstück kann entlang der Richtung der Abschnitte 2, 3, 4 ausgerichtet sein. Die Abschnitte 2, 3, 4 der Auflage weisen Auflageflächen 5, 6, 7 auf, die mit dem stabförmigen Werkstück in Kontakt gelangen können. Die Abschnitte 2 und 4 sind derart angeordnet und mit einem derartigen Abstand zueinander vorgesehen, dass jeweils ein Endbereich des stabförmigen Werkstücks auf dem Abschnitt 2 bzw. 4 aufliegt. Das zu messende Werkstück kann aber auch kürzer ausgebildet sein, so dass das Werkstück nur auf den Abschnitten 2 und 3 bzw. 3 und 4 aufliegen kann.

Die Auflageflächen 5, 6, 7 der Abschnitte 2, 3, 4 sind im Wesentlichen plan ausgestaltet, können jedoch auch V-förmig ausgestaltet sein. Die Abschnitte 2, 3, 4 können in der Höhe druck- bzw. weg- und/oder kraftgeregelt verfahren werden. Die Auflageflächen 5, 6, 7 der Abschnitte 2, 3, 4 sind damit in einer Richtung im Wesentlichen parallel zur Richtung der Erdbeschleunigung verfahrbar. Die Regelung der Bewegung in Richtung im Wesentlichen parallel zur Richtung der Erdbeschleunigung kann in Abhängigkeit des Eigengewichts des stabförmigen Werkstücks erfolgen. Insbesondere kann hier aufgrund einer Massenverteilung des stabförmigen Werkstücks, d.h. einer Kenntnis der Dichte des stabförmigen Werkstücks und der Größe der Auflageflächen 5, 6, 7 ein Druck eingestellt werden, mit dem die Abschnitte 2, 3, 4 in einer Richtung im Wesentlichen parallel zur Richtung der Erdbeschleunigung ausgefahren werden können.

Die Auflageflächen 5, 6, 7 der Abschnitte 2, 3. 4 können neben der möglichen Bewegung in einer Richtung im Wesentlichen parallel zur Richtung der Erdbeschleunigung auch in einer Komponente quer zur Richtung der Erdbeschleunigung beweglich sein.

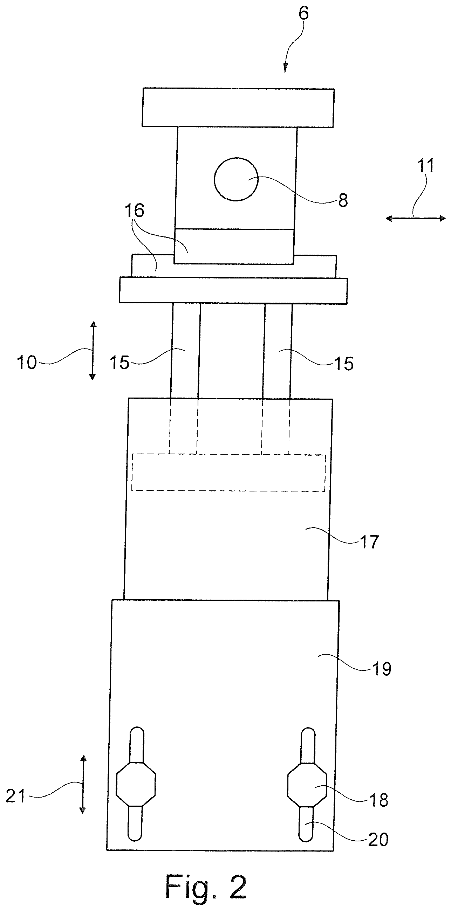

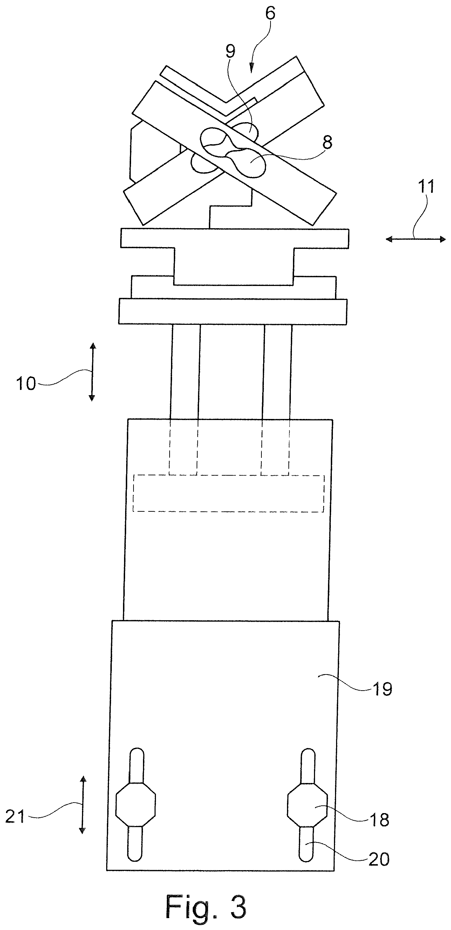

An den Auflagen 2, 3, 4 ist mindestens ein Kraftsensor 8, 9 angeordnet (Fig. 2 und 3), mit dem jeweils eine von dem stabförmigen Werkstück auf die Auflagefläche 5, 6, 7 ausgeübte Kraft in einer Richtung im Wesentlichen quer zur Richtung der Erdbeschleunigung bestimmt werden kann. Der mindestens eine Kraftsensor 8, 9 kann insbesondere zur Bestimmung einer von dem stabförmigen Werkstück auf die Auflagefläche 5, 6, 7 ausgeübten Kraft in einer Richtung im Wesentlichen quer zur Richtung der Erdbeschleunigung und ungleich der Längsrichtung des stabförmigen Werkstücks vorgesehen sein.

Zudem kann mit dem Kraftsensor 8, 9 auch eine von dem stabförmigen Werkstück auf die Auflagefläche 5, 6, 7 ausgeübte Kraft in einer Richtung der Erdbeschleunigung gemessen werden. Die Richtung der Erdbeschleunigung ist im Wesentlichen in Richtung durch den senkrechten Doppelpfeil 10 in der Fig. 1 angezeigt. Die Beweglichkeit quer zur Richtung der Erdbeschleunigung ist als Doppelpfeil 11 (Fig. 2 und 3) angezeigt.

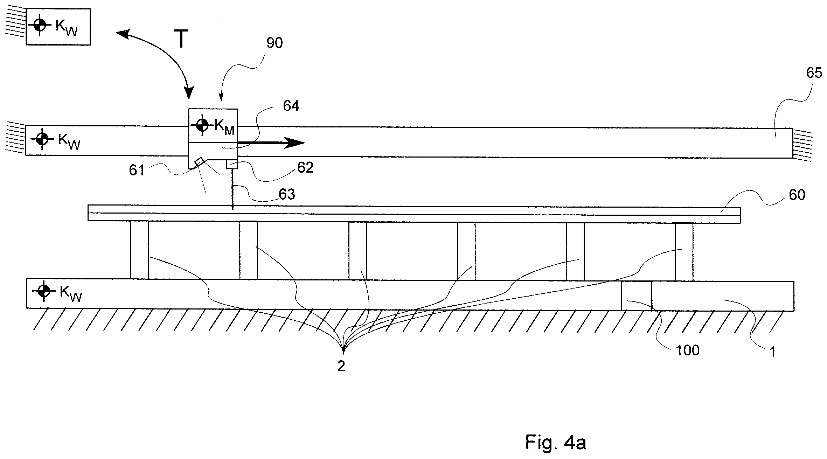

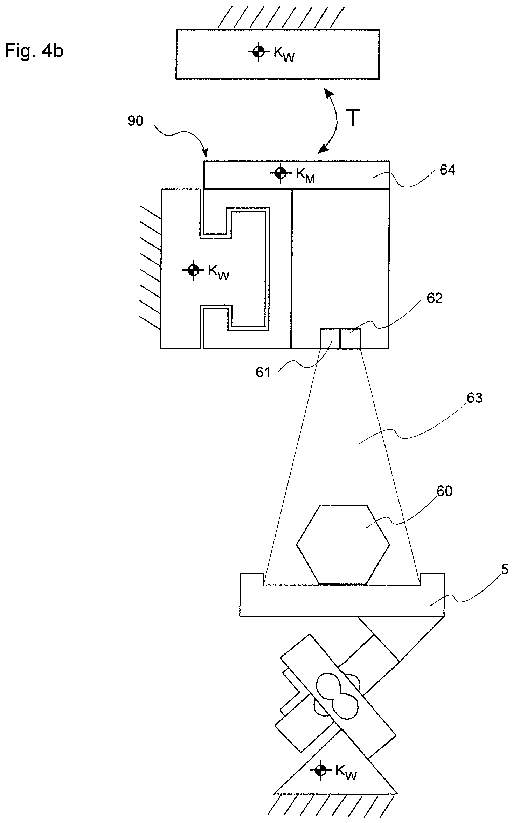

Zur optischen Erfassung des auf der Auflage aufliegenden Werkstücks ist eine unter Bezugnahme auf die Fig. 4 bis 7 beschriebene Halterung 64, die entlang einer Führung 65, die Teil einer Verfahreinrichtung 90 ist, bewegt werden kann, vorgesehen.

Die Fig. 2 zeigt in einer teilweise geschnittenen Darstellung beispielhaft für einen der Abschnitte 2, 3, 4 den Abschnitt 3 der Auflage. Die Auflagefläche 6 ist mit dem Kraftsensor 8 derart gekoppelt, dass eine von dem Werkstück auf die Auflagefläche 6 wirkende Kraft messbar ist. Mit dem Kraftsensor 8 sind Komponenten der Kraft messbar, die (a) in Richtung der Erdbeschleunigung wirken und (b) in einer Richtung quer zur Richtung der Erdbeschleunigung. Die Komponente in Richtung quer zur Richtung der Erdbeschleunigung kann zudem insbesondere ungleich der Längsrichtung des Werkstücks sein.

Die Auflagefläche 6 ist zudem an einer Kolbenstange 15 angeordnet bzw. an dieser befestigt, wobei zwischen der Kolbenstange 15 und der Auflagefläche 6 eine seitliche Beweglichkeit mittels einer Schienenführung 16 möglich ist.

Die Kolbenstange 15 ist in einem Zylinder 17 verschieblich. Zur Beaufschlagung des Zylinders 17 mit Druckluft weist der Zylinder 17 einen Zylindereinlass mit einem Druckregelventil und einen Zylinderauslass auf, wobei der Zylinderauslass auch eine Drossel aufweist.

Der Zylinder 17 mit der Kolbenstange 15 ist an einem Führungsstück 19 befestigt. Das Führungsstück 19 weist Führungslängsschlitze 20 in Form von Durchbrüchen auf, durch die sich Befestigungsschrauben 18 erstrecken können, mittels derer eine Befestigung mit einer voreinstellbaren Höhe möglich ist, was durch den Doppelpfeil 21 angegeben ist.

Die Fig. 3 zeigt eine alternative Ausführungsform mit einer V-förmigen Auflagefläche 6. Es sind zwei Kraftsensoren 8, 9 vorgesehen, mit denen eine von dem Werkstück auf die Auflagefläche 6 wirkende Kraft messbar ist. Mit den Kraftsensoren 8, 9 sind Komponenten der Kraft messbar, die (a) in Richtung der Erdbeschleunigung wirken und (b) in einer Richtung quer zur Richtung der Erdbeschleunigung. Die Komponente in Richtung quer zur Richtung der Erdbeschleunigung kann zudem insbesondere ungleich der Längsrichtung des Werkstücks ausgerichtet sein. Die in den Fig. 2 und 3 gezeigten Ausführungsformen für die Ausgestaltung der Auflagefläche 6 sind frei kombinierbar. Vorurteile und entgegenstehende Auffassungen existieren nicht. Insbesondere können Kraftsensoren 8, 9 in jeglicher Anordnung und Ausgestaltung verwendet werden, mit denen Kräfte messbar sind, die Komponenten aufweisen, die (a) in Richtung der Erdbeschleunigung und (b) in einer Richtung quer zur Richtung der Erdbeschleunigung wirken. Die Komponente in Richtung quer zur Richtung der Erdbeschleunigung kann zudem insbesondere ungleich der Längsrichtung des Werkstücks ausgerichtet sein. Eine Erfassung der Kräfte sowohl in Richtung der Erdbeschleunigung als auch in Richtung quer zur Erdbeschleunigung kann berücksichtigt werden und bei der Messung der Geradheit ein verbessertes Ergebnis liefern.

Ein Verfahren kann insbesondere mit der in der Fig. 1 gezeigten Vorrichtung und den in den Fig. 2 und/oder 3 dargestellten Abschnitten der Auflage mit den entsprechenden Auflageflächen erfolgen. Das stabförmige Werkstück kann zunächst auf einer zusätzlichen Auflage aufgelegt werden. Die zusätzliche Auflage kann insbesondere auch Abschnitte aufweisen, die eine jeweilige Auflagefläche umfassen. Die zusätzliche Auflage kann dazu dienen, insbesondere die Auflageflächen, die frei in der Richtung im Wesentlichen quer zur Erdbeschleunigung beweglich sind, zu schützen bzw. die Belastung zu reduzieren.

Die Abschnitte der zusätzlichen Auflage können insbesondere in der gleichen Richtung wie die Auflage, die die vorgenannten Abschnitte, die eine frei bewegliche Auflagefläche aufweisen, umfassen, ausgerichtet sein. Die Abschnitte der zusätzlichen Auflage können eingefahren werden und die Abschnitte der frei beweglichen Auflage in Richtung des stabförmigen Werkstücks bewegt werden, so dass die Abschnitte der zusätzlichen Auflage außer Kontakt mit dem stabförmigen Werkstücks und die Abschnitte der Auflage, die frei beweglich sind, in Kontakt mit dem stabförmigen Werkstücks gelangen können.

Zur optischen Erfassung eines auf den Auflageflächen 5, 6, 7 aufliegenden Werkstücks 60, welches in Fig. 4 gezeigt ist, ist eine als Kamera ausgestaltete Bilderfassungsvorrichtung 61 und eine als Linienlaser ausgestaltete Projektionsvorrichtung 62 vorgesehen. Die Projektionsvorrichtung 62 projiziert eine im Wesentlichen quer zur Längsrichtung der Auflage ausgerichtete Linie 63 auf die Auflage bzw. das Werkstück 60. Die Bilderfassungsvorrichtung 61 erfasst die Linie 63 und Abweichungen von einer Ebene, so dass die Kontur bzw. das Profil des Werkstücks 60 ermittelbar ist. Um die Kontur bzw. das Profil des Werkstücks 60 entlang seiner Längsrichtung erfassen zu können, ist die Bilderfassungsvorrichtung 61 zusammen mit der Projektionsvorrichtung 62 an einer Halterung 64 angeordnet, die entlang der Längsrichtung der Auflage und somit entlang des Werkstücks verfahren werden kann.

Die Halterung 64 ist als Schlitten zur Bewegung an einer als Schiene ausgestalteten Führung 65 ausgebildet. Die Halterung 64 kann mittels eines Linearantriebs an der Führung 65 entlang der Auflage für das Werkstück 60 bewegt werden.

Um die Lage der Halterung 64 im Raum ermitteln zu können und insbesondere den Ort der Halterung 64 in Beziehung zur Auflage setzen zu können, um die an einem Ort von der Auflage ermittelte Kraft mit einer am selben Ort optisch erfassten Kontur korrelieren zu können, ist eine Referenzeinrichtung 100 vorgesehen. Mittels der Referenzeinrichtung 100 kann das Koordinatensystem K_{W}, mit welchem die Orte der Auflage, des Werkstücks und des sonstigen Raumes beschrieben werden können, in Beziehung zu einem Koordinatensystem K_{M} der Halterung 64 (Messkoordinatensystem) gesetzt werden. Die Koordinatensysteme K_{W} und K_{M} können mittels einer mit T bezeichneten Transformation ineinander überführt werden.

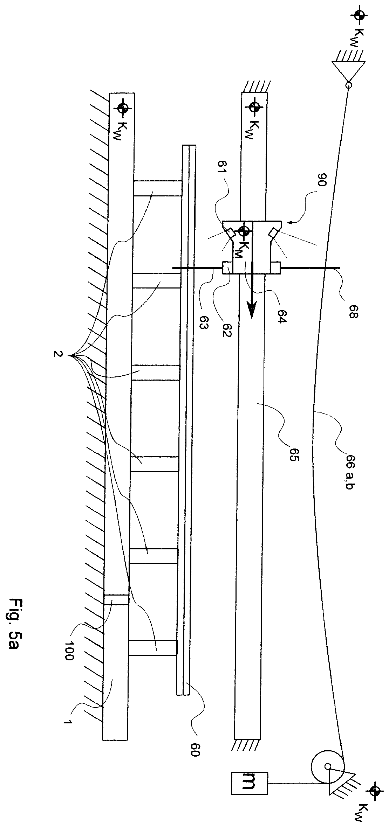

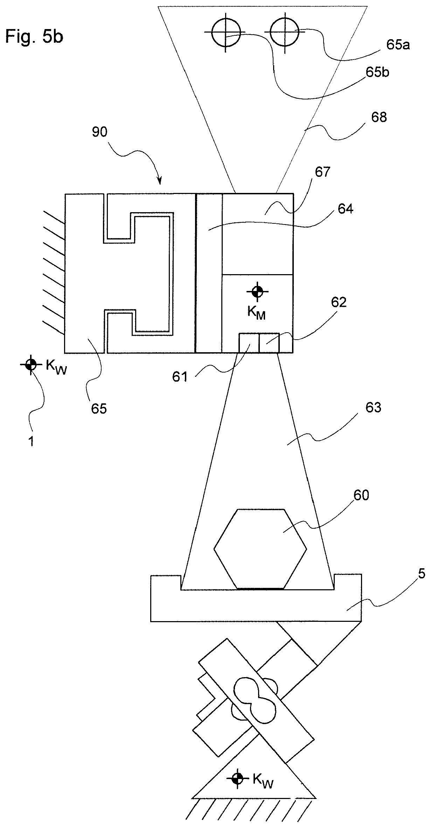

In Fig. 5 ist eine konkrete Ausführungsform beschrieben, um die Lage der Halterung 64 im Raum ermitteln zu können. Es werden zwei im Raum festgelegte längliche Referenzobjekte 66a, 66b, die als Seile frei im Raum zwischen zwei Punkten hängen und mit einer Last m endseitig belastet werden, verwendet. Die Ausrichtung der Referenzobjekte 66a, 66b ist im Wesentlichen längs der Auflage bzw. des Werkstücks 60. An der Halterung 64 ist eine Erfassungsvorrichtung 67 vorgesehen, die die Lage der Referenzobjekte 66a, 66b in Bezug auf die Halterung 64 ermittelt. Die Ermittlung der Lage der Halterung 64 gegenüber den Referenzobjekten 66a, 66b erfolgt mittels einer Laserstrahlebene und Triangulationsmessungen, welches mit dem Bezugszeichen 68 vereinfacht dargestellt ist. Durch die Bestimmung der räumlichen Beziehung der Halterung 64 zu den Referenzobjekten 66a, 66b beim Verfahren der Halterung 64 kann das mit K_{W} bezeichnete Koordinatensystem, mit welchem die Orte der Auflage und die Orte der Referenzobjekte 66a, 66b beschrieben werden, in Beziehung zum Koordinatensystem K_{M} der Halterung 64 (Messkoordinatensystem) gesetzt werden. Messungen der Auflage in Form der auf die Auflage wirkenden Kräfte können mit dem für denselben Ort optisch ermittelten Profil in Beziehung gesetzt werden.

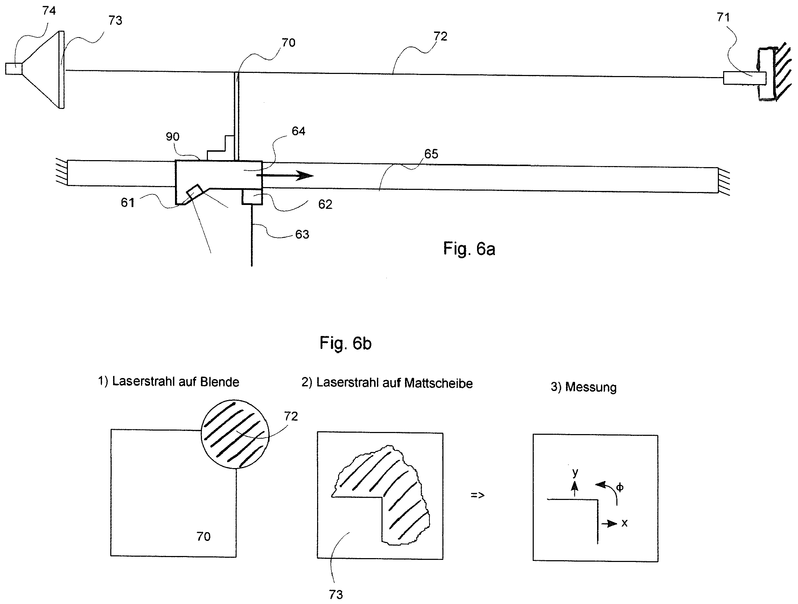

In Fig. 6 ist eine konkrete Ausführungsform beschrieben, um die Lage der Halterung 64 im Raum ermitteln zu können. Es wird eine an der Halterung 64 befindliche Blende 70 verwendet. Ein Laser 71 ist fest im Raum, d.h. mit einer festen räumlichen Beziehung zur Auflage angeordnet und strahlt einen Laserstrahl 72 auf eine Kante der Blende 70, so dass es einen Anteil des Laserstrahls 72 im Querschnitt gibt, der auf die Blende 70 fällt, und einen Anteil des Laserstrahls 72 im Querschnitt, der an der Blende gebrochen wird (Fig. 6b.1). Es ist eine Mattscheibe 73 vorgesehen, auf die der gebrochene Laserstrahl 72 fällt. Das Abbild auf der Mattscheibe 73 ist in Fig. 6b.2 dargestellt. Mit einer Kamera 74 kann das Abbild des Laserstrahls 72 auf der Mattscheibe 73 erfasst werden. Das Abbild auf der Mattscheibe 83 kann vermessen und ausgewertet werden (Fig. 6b.3), um die Transformation T zwischen den Koordinatensystemen K_{W} und K_{M} zu ermitteln.

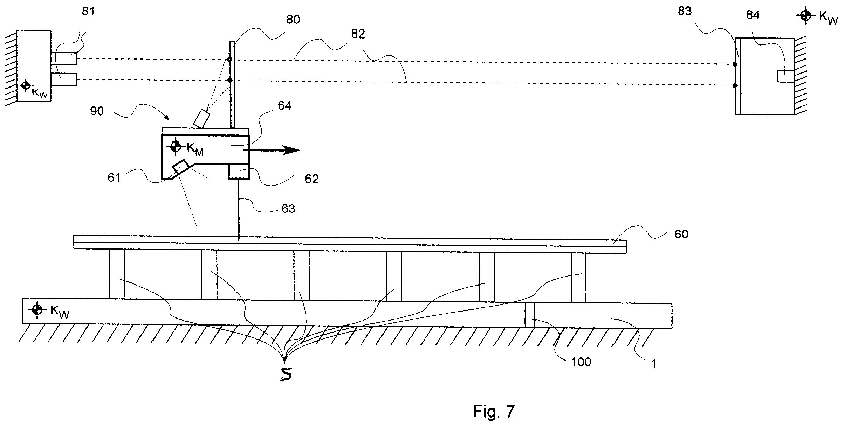

In Fig. 7 ist eine konkrete Ausführungsform beschrieben, um die Lage der Halterung 64 im Raum ermitteln zu können. Es wird ein an der Halterung 64 befindliches teilweise durchlässiges Abbildungsmittel 80, welches als halbdurchlässige Scheibe ausgestaltet ist, verwendet. Zwei übereinander angeordnete Laser 81 sind fest im Raum, d.h. mit einer festen räumlichen Beziehung zur Auflage, angeordnet und strahlen jeweils einen Laserstrahl 82 auf das Abbildungsmittel 80. Auf dem Abbildungsmittel 80 werden zwei Punkte beim Durchtrittspunkt der beiden Laserstahlen 82 abgebildet. Die beiden durchgehenden Laserstrahlen 82 werden auf einer Mattscheibe 83 abgebildet und von einer Kamera 84 erfasst. Über den Punkt der Entsendung am Laser 81 und den Abbildungspunkt auf der Mattscheibe 83 können beide Laserstrahlen 82 über eine Geradengleichung beschrieben werden. Die Lage des Messkoordinatensystems K_{M} zu dem Koordinatensystem K_{W} des Raums kann durch die Lage der Abbildung der Laserstrahlen 82 auf dem Abbildungsmittel 80 zu der errechneten Lage der Laserstrahlen in Beziehung gesetzt werden, um die Transformation T zwischen den Koordinatensystemen K_{W} und K_{M} zu ermitteln.

## Patentansprüche

1. Vorrichtung zur Messung der Geradheit eines stabförmigen Werkstücks, aufweisend
- eine Auflage für das stabförmige Werkstück, die mehrere Abschnitte (2, 3, 4) mit jeweils einer Auflagefläche (5, 6, 7) aufweist,
- eine Halterung für eine Projektionsvorrichtung (62) zum Projizieren eines Lichtstrahls auf die Auflage und/oder eine Bilderfassungsvorrichtung (61) zum Erfassen eines Bildes eines auf der Auflage aufliegenden Werkstücks und
- eine Referenzeinrichtung (100), die ausgestaltet ist, eine Position der Halterung (64) zu mindestens einem Ort der Auflage in Beziehung zu setzen.

2. Vorrichtung nach Anspruch 1, wobei die Referenzeinrichtung (100) ausgestaltet ist, ein die Halterung (64) betreffendes Koordinatensystem in ein die Auflage betreffendes Koordinatensystem zu überführen.

3. Vorrichtung nach Anspruch 1 oder 2, wobei eine Verfahreinrichtung zum Bewegen der Halterung (64) entlang der Auflage vorgesehen ist.

4. Vorrichtung nach Anspruch 1 bis 3, wobei die Referenzeinrichtung (100) aufweist:
a) ein im Raum festgelegtes Referenzobjekt (66), wobei die Referenzeinrichtung (100) ausgestaltet ist, die Position des Referenzobjekts (66) mittels einer an der Halterung (64) befindlichen Erfassungsvorrichtung (67) in Bezug auf die Auflage zu erfassen und/oder
b) ein an der Halterung (64) befindliches Referenzobjekt (66), wobei die Referenzeinrichtung (100) ausgestaltet ist, die Position des Referenzobjekts (66) mittels einer im Raum festgelegten Erfassungsvorrichtung (67) in Bezug auf die Auflage zu erfassen.

5. Vorrichtung nach Anspruch 4, wobei das im Raum festgelegte Referenzobjekt (66) ein im Wesentlichen längs der Auflage aufgehängtes Objekt ist und/oder das an der Halterung (64) befindliche Referenzobjekt (66) ein optisches Mittel in Form einer Blende (70), eines Reflektors, einer einen Lichtstrahl erzeugenden Lichtquelle, eines teildurchlässigen Abbildungsmittels oder ähnlichem ist.

6. Vorrichtung nach einem der Ansprüche 1 bis 5, wobei die Projektionsvorrichtung (62) ein Linienscanner ist.

7. Vorrichtung nach einem der Ansprüche 1 bis 6, wobei mindestens ein Kraftsensor (8, 9) zur Bestimmung einer von dem stabförmigen Werkstück auf die Auflagefläche (5, 6, 7) ausgeübten Kraft in einer Richtung im Wesentlichen quer zur Richtung der Erdbeschleunigung vorgesehen ist.

8. Vorrichtung nach einem der Ansprüche 1 bis 7, **dadurch gekennzeichnet, dass** der mindestens eine Kraftsensor (8, 9) zur Bestimmung einer von dem stabförmigen Werkstück auf die Auflagefläche (5, 6, 7) ausgeübten Kraft in einer Richtung im Wesentlichen quer zur Richtung der Erdbeschleunigung und ungleich der Längsrichtung des stabförmigen Werkstücks vorgesehen ist.

9. Vorrichtung nach einem der Ansprüche 1 bis 8, **dadurch gekennzeichnet, dass** der mindestens eine Kraftsensor (8, 9) zudem zur Bestimmung einer von dem stabförmigen Werkstück auf die Auflagefläche (5, 6, 7) ausgeübten Kraft in einer Richtung im Wesentlichen in Richtung der Erdbeschleunigung ausgestaltet ist und/oder ein weiterer Kraftsensor (8, 9) vorhanden ist, mit dem eine von dem stabförmigen Werkstück auf die Auflagefläche (5, 6, 7) ausgeübte Kraft in einer Richtung im Wesentlichen in Richtung der Erdbeschleunigung bestimmbar ist.

10. Vorrichtung nach einem der Ansprüche 1 bis 9, **dadurch gekennzeichnet, dass** mindestens eine Auflagefläche (5, 6, 7) quer zur Richtung der Erdbeschleunigung, insbesondere mit einer Komponente ungleich der Längsrichtung des stabförmigen Werkstücks, bewegbar ist.

11. Vorrichtung nach einem der Anspruch 1 bis 10, **dadurch gekennzeichnet, dass** die Auflagefläche (5, 6, 7) neigbar und/oder verschieblich gelagert ist.

12. Vorrichtung nach einem der Ansprüche 1 bis 11, **dadurch gekennzeichnet, dass** die Bewegung der Auflagefläche (5, 6, 7) quer zur Richtung der Erdbeschleunigung erfasst wird.

13. Verfahren zum Messen der Geradheit eines stabförmigen Werkstücks, wobei das Werkstück auf eine eine Auflagefläche (5, 6, 7) aufweisende Auflage aufgelegt wird, eine Halterung (64) für eine Projektionsvorrichtung (62) zum Projizieren eines Lichtstrahls auf die Auflage und/oder eine Bilderfassungseinrichtung zum Erfassen eines Bildes des auf der Auflage aufliegenden Werkstücks vorgesehen ist, und mindestens eine Position der Halterung (64) zu mindestens einem Ort der Auflage in Beziehung gesetzt wird.

14. Verfahren nach Anspruch 13, **dadurch gekennzeichnet, dass** ein die Halterung (64) betreffendes Koordinatensystem in ein die Auflage betreffendes Koordinatensystem überführt wird.

15. Verfahren nach Anspruch 13 oder 14, **dadurch gekennzeichnet, dass** die von dem stabförmigen Werkstück auf die Auflagefläche (5, 6, 7) ausgeübte Kraft in einer Richtung im Wesentlichen quer zur Richtung der Erdbeschleunigung gemessen wird.
